# EUROPEAN PATENT APPLICATION

(11) **EP 2 523 408 A2**
(43) Date of publication of application: **14.11.2012**
(21) Application number: 12275062.3
(22) Date of filing: 04.05.2012
(51) Int. Cl.: H04L 12/56

(54) **Method and apparatus to determine the amount of data outstanding throughout the life of a tcp flow (socket connection)**

(30) Priority: 12.05.2011 US 201113106847
(71) Applicant: Fluke Corporation Inc., Everett, WA 98203 (US)
(72) Inventor: Roberts, Doug, McDonough, Georgia 30252 (US); Prescott, Dan, Elbert, Colorado 80106 (US); Kosbab, Bruce, Colorado Springs, Colorado 80920 (US)
(74) Representative: Lock, Howard John

(57) **Abstract**

Network monitoring method and apparatus determines the amount of data outstanding throughout the life of a TCP flow (socket connection). Observing network traffic, calculation of the outstanding data is made, providing information useful for network performance analysis and troubleshooting.

## Description

### Technical Field

This invention relates to networking, and more particularly but not exclusively to determination of network data outstanding throughout the life of a TCP flow.

### Background Art

In a computer networking environment, users may install and deploy monitoring and/or troubleshooting tools for observation of network traffic and network installation and maintenance. The TCP protocol provides a reliable transport mechanism between two machines on a network.

It can be useful to be able to measure in flight data, i.e. how much data is outstanding for each direction in a socket connection at any particular time. However, it requires computation power and time to monitor each outgoing item of data in order to track outstanding data. Especially in situations of heavy network traffic, preserving computation power for other uses may be desirable.

### Summary of invention

According to one aspect of this invention, there is provided a method of determining the amount of data outstanding throughout the life of a TCP flow, comprising:

observing data transmission sequence values from a server;

determining outstanding unacknowleged data amount based on a last observed data transmission sequence value and an acknowledged data sequence value.

According to another aspect of this invention, there is provided a network test instrument for determining network round trip time, comprising:

a network interface for observing network traffic; and

a processor, said processor including employing observed network traffic to determining data transmission sequence values sent from a server and determining outstanding unacknowledged data amount based on a last observed highest data transmission sequence value and an acknowledged data sequence value.

In accordance with the invention, the amount of data that is outstanding (or in flight) is determined. The resulting value can be employed to give an indication of endpoint efficiency, more particularly the efficiency of the machines on the network which are participating in the transfer of said data.

In accordance with the invention, improved measurement and reporting of outstanding network data is provided.

It is an advantage of the preferred embodiment of the present invention that it provides an improved network analysis that determines outstanding data on a socket connection.

It is a further advantage of the preferred embodiment of the present invention that it provides an improved network monitoring device that measures and reports in flight data in a TCP socket connection.

It is yet another advantage of the preferred embodiment of the present invention that it provides improved methods of network monitoring and analysis to measure and report outstanding transfer data in a TCP socket connection.

The subject matter of the present invention is particularly pointed out and distinctly claimed in the concluding portion of this specification. However, both the organization and method of operation, together with further advantages thereof, may best be understood by reference to the following description taken in connection with accompanying drawings wherein like reference characters refer to like elements.

### Brief description of drawings

FIG. 1 is a block diagram of a network with a network analysis product interfaced therewith;

FIG. 2 is a block diagram of a monitor device for determining the amount of data outstanding throughout the life of a TCP flow; and

FIG. 3 is a flow diagram illustrating the determination of amount of data outstanding.

### Detailed Description

The system according to a preferred embodiment of the present invention comprises a monitoring system and method and an analysis system and method for determining the amount of data outstanding throughout the life of a TCP flow.

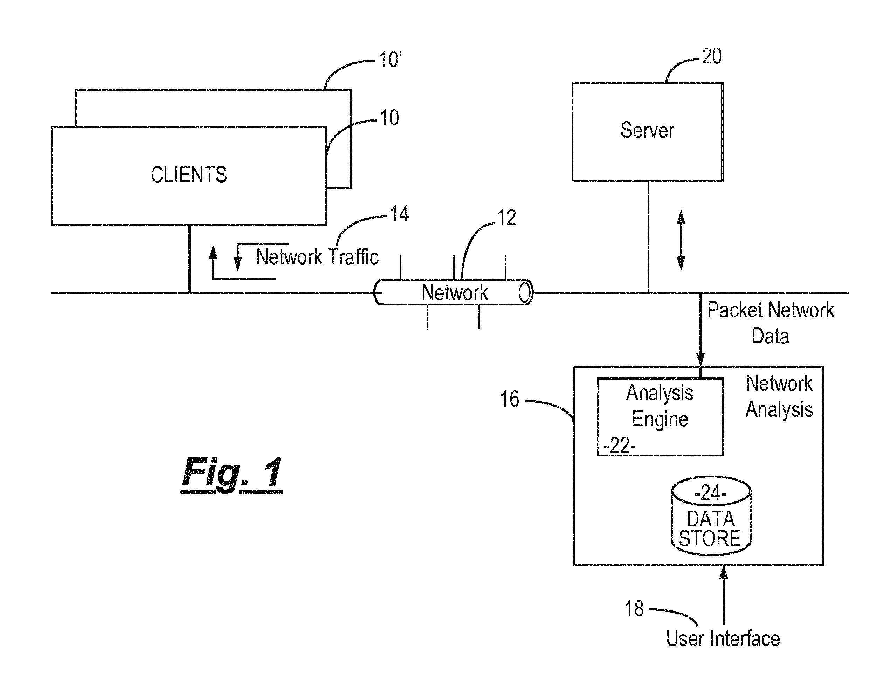

Referring to FIG. 1, a block diagram of a network with an apparatus in accordance with the disclosure herein, a network may comprise plural network clients 10, 10', etc., which communicate over a network 12 by sending and receiving network traffic 14 via interaction with server 20. The traffic may be sent in packet form, with varying protocols and formatting thereof.

A network analysis device 16 is also connected to the network, and may include a user interface 18 that enables a user to interact with the network analysis device to operate the analysis device and obtain data therefrom, whether at the location of installation or remotely from the physical location of the analysis product network attachment.

The network analysis device comprises hardware and software, CPU, memory, interfaces and the like to operate to connect to and monitor traffic on the network, as well as performing various testing and measurement operations, transmitting and receiving data and the like. When remote, the network analysis device typically is operated by running on a computer or workstation interfaced with the network.

The analysis device comprises an analysis engine 22 which receives the packet network data and interfaces with data store 24.

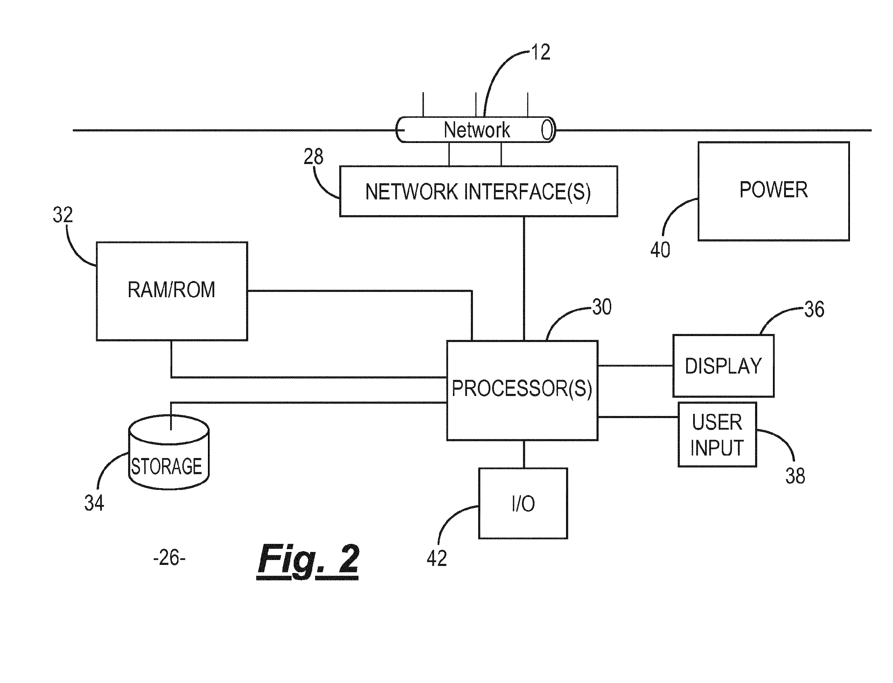

FIG. 2 is a block diagram of a test instrument/analyzer 26 via which the invention can be implemented, wherein the instrument may include network interfaces 28 which attach the device to a network 12 via multiple ports, one or more processors 30 for operating the instrument, memory such as RAM/ROM 32 or persistent storage 34, display 36, user input devices 38 (such as, for example, keyboard, mouse or other pointing devices, touch screen, etc.), power supply 40 which may include battery or AC power supplies, other interface 42 which attaches the device to a network or other external devices (storage, other computer, etc.).

In operation, the network test instrument is attached to the network, and observes transmissions on the network to collect statistics thereon and to determine the amount of data outstanding throughout the life of a TCP flow.

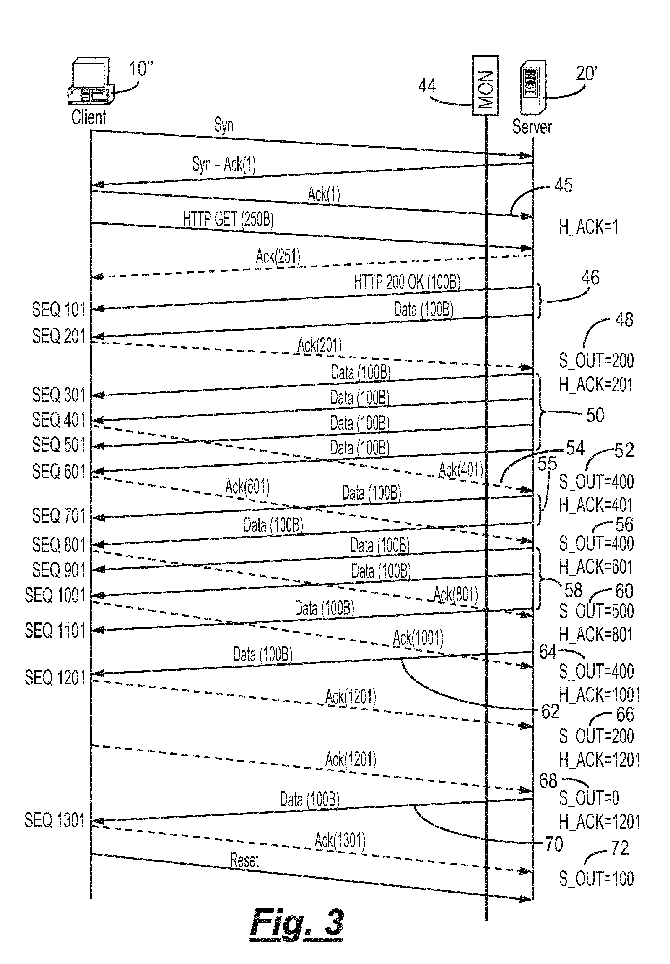

FIG. 3 is a flow diagram illustrating the environment and operation of the invention. Client 10" and server 20' are illustrated with the space therebetween illustrating the network and traffic. Monitor device 44 is illustrated as observing network traffic at a position on the network.

In the case where the monitor 44 can see both sides of the transaction, the data in flight is determined as follows, with reference to the illustrated communication example of client 10" making an HTTP GET request for data from server 20'.

Client 10" initiates the transaction by making a Syn request to begin the establishment of connection. Server 20' replies with Syn-Ack and client 10" responds with an Ack, acknowledging the sequence number (in the illustrated example, sequence number is 0, the acknowledgment giving sequence number + 1). The client then issues an HTTP GET request. The server responds with an Ack, and then begins sending data in two 100 byte packets (HTTP 200 OK (100 B) and Data (100 B) at 46, sequence numbers 101 and 201. At 48, just prior to Ack(201) from the client, acknowledging the first 201 sequence packets, it is determined that the amount of data outstanding (S_OUT) is 200 (determined by taking the value 201, highest outgoing sequence number that has been observed, minus 1, the last highest ACK seen (H_ACK) (observed at point 45 when the first ACK from the client was seen)). After determining the outstanding data, the last highest ACK value seen is updated to the value 201.

Now, 4 packets of 100 bytes of data are sent at 50 (sequence numbers 301, 401, 501 and 601), so the current highest outgoing sequence number is 601, and on observing ACK 401 at 54, a new value of outstanding data S_OUT is determined to be 400 at 52 (601 highest sequence number seen - 201 last highest ACK seen). The last highest ACK value is updated to 401. The server sends out data sequences 701 and 801, at 55, so the largest sequence number out is now 801, and at 56 another ACK from the client is observed (ACK 601), so S_OUT is determined to be 400 (highest data sequence seen 801 minus highest prior ack 401), and highest prior ACK is updated to 601. Server 20' sends out 3 more 100 B more data packets (sequence numbers 901, 1001, 1101) at 58 and ACK(801) is now seen. S_OUT is 500 (1101 highest sequence observed minus 601 highest prior acknowledged) at 60. Now the highest observed prior ACK is updated to value 801.

One additional packet of data (sequence 1201) is sent, at 62 and Ack(1001) is observed, so it is determined that S_OUT is 400 at 64 (sequence 1201 minus acknowledged 801), and highest prior ACK is set to 1001. Ack(1201) is subsequently received at the Server, but no higher outgoing data sequence number has been observed since the last ACK, so S_OUT is calculated as 200 after Ack(1201) at 66 (1201 sent sequence - 1001 acknowledged). A duplicate Ack (1201) is received so S_OUT is now determined to be 0 (1201 sent-1201 acknowledged) at 68.

A further data sequence 1301 is sent at 70, and S_OUT is 100 (1301 sent - 1201 acknowledged) at 72, (1301) acknowledging data sequence 1300. A Reset from the client then ends the connection.

In accordance with the above, a measurement of outstanding data is taken when an ACK is seen, before the ACK is processed, by taking the highest sequence number seen sent from a server, and subtracting the sequence number of the prior highest ACK from the receiver. The method and apparatus provides a quick determination of the amount of outstanding data throughout the life of a TCP flow without requiring extensive computation and data observation and analysis. This information can be used for other processing and analysis in network monitoring. The determination provides a reasonably close measurement of outstanding data without requiring extensive monitoring of outgoing data packets, preserving computation power for other operations, while still providing useful measurement of outstanding data.

While a preferred embodiment of the present invention has been shown and described, it will be apparent to those skilled in the art that many changes and modifications may be made without departing from the invention in its broader aspects. The appended claims are therefore intended to cover all such changes and modifications as fall within the true spirit and scope of the invention.

## Claims

1. A method of determining the amount of data outstanding throughout the life of a TCP flow, comprising: observing data transmission sequence values from a server; determining outstanding unacknowledged data amount based on a last observed data transmission sequence value and an acknowledged data sequence value.

2. A method according to claim 1, wherein said determining comprises subtracting a last highest acknowledged sequence number from an observed highest outgoing sequence number.

3. A method according to claim 2, comprising on receipt of an ACK, performing said subtracting prior to updating the last highest acknowledged sequence number.

4. A network test instrument for determining network round trip time, comprising:
a network interface for observing network traffic; and a processor, said processor including employing observed network traffic to determining data transmission sequence values sent from a server and determining outstanding unacknowledged data amount based on a last observed highest data transmission sequence value and an acknowledged data sequence value.

5. A network test instrument according to claim 4, wherein said processor determines outstanding unacknowledged data by subtracting a last highest acknowledged sequence number from an observed highest outgoing sequence number.

6. A network test instrument according to claim 5, wherein said processor, on receipt of an ACK, performs said subtracting prior to updating the last highest acknowledged sequence number.
